# EUROPÄISCHE PATENTSCHRIFT

(11) **EP 2 020 259 B1**
(45) Veröffentlichungstag und Bekanntmachung des Hinweises auf die Patenterteilung: **05.10.2011**
(21) Anmeldenummer: 08160720.2
(22) Anmeldetag: 18.07.2008
(51) Int. Cl.: B01D 53/04, B01D 53/26

(54) **Trockenmittelbox zum Entfeuchten von Luft**
Desiccant box for removing moisture from air
Boîte d'agent déshydratant destinée à la déshumidification d'air

(30) Priorität: 20.07.2007 DE 102007034435
(43) Veröffentlichungstag der Anmeldung: 04.02.2009
(73) Patentinhaber: MANN+HUMMEL GmbH, 71638 Ludwigsburg (DE)
(72) Erfinder: Amesöder, Dieter, 74321 Bietigheim-Bissingen (DE); Niemeyer, Stephan, 71711 Steinheim (DE); Koch, Eugen, 75328 Schömberg (DE)

(56) Entgegenhaltungen:
- EP-A- 1 529 562
- WO-A-2004/103509
- DE-A1- 19 627 889
- DE-A1- 19 650 186
- DE-A1- 19 721 230

## Beschreibung

### Technisches Gebiet

Die Erfindung betrifft eine Trockenmittelbox zur Entfeuchtung von Luft, nach Merkmalen des Oberbegriffs des unabhängigen Anspruchs 1.

### Stand der Technik

Eine solche Trockenmittelbox ist aus der DE 103 13 575 bekannt. Diese besteht aus einem Innengehäuse, in dem sich Trockenmittel befindet, sowie einem Außengehäuse, das einen Verschlussdeckel aufweist. Zur Fixierung des Innengehäuses und zur Verdichtung des Trockenmittels ist zwischen Innen- und Außengehäuse eine Druckfeder angeordnet, die dafür sorgt, dass bei extremen Schwingungen und Erschütterungen das Trockenmittel in kompakter Form erhalten bleibt und ein Aneinanderreiben von einzelnen Partikeln des Trockenmittels und damit ein Entstehen von Abrieb wirksam vermieden wird.

Ein Nachteil des Standes der Technik besteht darin, dass das Außengehäuse nicht vollständig mit Trockenmittel aufgefüllt werden kann. Üblicherweise wird das Trockenmittel in das Innengehäuse eingefüllt, dieses verschlossen und anschließend in das Außengehäuse eingeschoben. Da die Füllung von der gewölbten Seite aus erfolgen muss, kann das Trockenmittel lediglich bis zum Außenrand des Innengehäuses befüllt werden.

Aus der DE 196 27 883 ist eine Trockenmittelbox mit einem gewölbten Innengehäuse bkannt.

Es ist weiterhin aus der US 6,484,413 ein Lufttrockner bekannt, der zumindest ein Innengehäuse aufweist, das sich der gewölbten Kontur des Außendeckels anpasst, allerdings sind auf der Gegenseite Druckfedern vorgesehen, die einen axial verschiebbaren Deckel stützen.

Ein Nachteil dieser bekannten Einrichtung besteht darin, dass ein nichtbefüllbarer Hohlraum entsteht, der unter Umständen eine Bypasswirkung für die zu entfeuchtende Luft besitzt.

### Offenbarung der Erfindung

Der Erfindung liegt die Aufgabe zugrunde, die genannten Nachteile zu vermeiden und eine Trockenmittelbox zum Entfeuchten von Luft zu schaffen, die einen optimalen Füllgrad aufweist und eine prozesssichere Befüllung zulässt.

Diese Aufgabe wird ausgehend von dem Oberbegriff des unabhängigen Anspruchs 1, durch dessen kennzeichnende Merkmale gelöst.

Der wesentliche Vorteil der Erfindung besteht darin, dass in der Trockenmittelbox zwei Innengehäuse vorgesehen sind, die sich optimal der Außenkontur des Gesamtsystems anpassen. Beide Innengehäuse werden komplett gefüllt und bei der Montage miteinander verbunden. Beide Innengehäuse sind konzentrisch zueinander aufgebaut und füllen das zylindrische Außengehäuse nahezu vollständig auf.

Eine Ausgestaltung der Erfindung sieht vor, wenigstens eines der beiden Innengehäuse mit einem luftdurchlässigen Deckel zu versehen. Dies erleichtert den Zusammenbau, d. h. es verhindert das Herausrieseln des granulierten Trockenmittels aus dem Gehäuse beim Zusammenstülpen der beiden Innengehäuse.

Gemäß einer weiteren Ausgestaltung der Erfindung sind beide Innengehäuse mit Lufteinlass- bzw. Luftauslassöffnungen versehen. Diese sind so angeordnet, dass eine möglichst gleichmäßige Durchströmung der zu entfeuchtenden Luft durch das Granulat gewährleistet wird. Zur einfachen Montage sind die beiden Innengehäuse an ihrer Kupplungsstelle mit Rastverbindungen versehen, insbesondere bei Kunststoffgehäusen ist diese Verbindung besonders wirtschaftlich und einfach zu realisieren. An den beiden Innengehäusen - die eine bauliche Einheit bilden - greift zentrisch eine Druckfeder an, deren Druck überträgt sich auf das Trockenmittel, welches sich auch bei längerem Gebrauch nicht aufrüttelt.

Zur Vermeidung von Staub- oder Schmutzeintrag über die zu entfeuchtende Luft, kann ein Filterelement in Form eines Partikelfilters innerhalb des Außengehäuses vorgesehen sein.

### Kurze Beschreibung der Zeichnungen

Diese und weitere Merkmale sind nicht nur aus den Ansprüchen, sondern auch aus der Beschreibung und den Zeichnungen zu entnehmen.

Es zeigt:

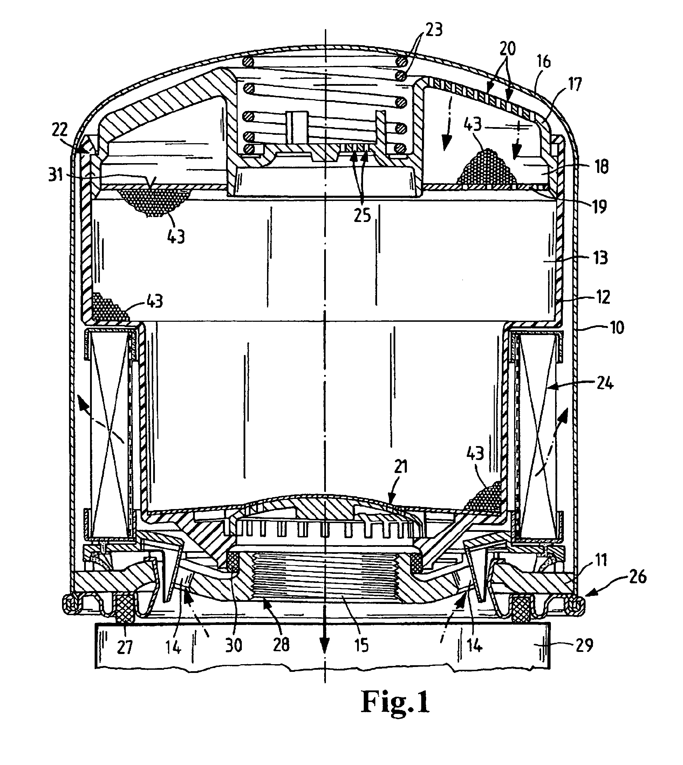

Figur 1 eine Trockenmittelbox in einer Schnittdarstellung,

### Ausführungsform(en) der Erfindung

Die Trockenmittelbox gemäß Figur 1 besteht aus einem Außengehäuse 10, das mit einem Deckel 11 verschlossen ist. Die Befestigung zwischen Deckel 11 und Außengehäuse erfolgt über eine Bördelplatte 26. An dieser befindet sich eine Abdichtung 27, der Deckel 11 weist ein Gewinde 28 auf sowie Einströmöffnungen 14 und innerhalb des Gewindes eine Ausströmöffnung 15. Über ein hohles Gewinderohrstück wird die Trockenmittelbox an einer hier nur schematisch dargestellten Trägerplatte 29 befestigt.

Innerhalb des Außengehäuses 10 befindet sich ein Innengehäuse 12, das wie das Außengehäuse zylindrisch gestaltet ist und über die Zwischenschaltung einer Dichtung 30 an dem Deckel 11 anliegt. Dieses Gehäuse ist bis zur Oberkante 31 mit Trockenmittelgranulat gefüllt.

Oberhalb des Innengehäuses 12 befindet sich ein weiteres Innengehäuse 17, das ebenfalls mit Trockenmittel befüllt ist. Dieses Innengehäuse ist mit einem Deckel 19 verschlossen.

Der Deckel 19 hat die Aufgabe, nach dem Befüllen des Innengehäuses 17 mit Trockenmittel ein Herausfallen des Trockenmittels beim Handling bzw. beim Aufstecken des Innengehäuses 17 an das Innengehäuse 12 zu vermeiden.

Das Innengehäuse 17 besitzt Lufteinlassöffnungen 20, das Innengehäuse 12 Luftauslassöffnungen 21. Die zu entfeuchtende Luft strömt über die Einströmöffnungen 14 durch den Deckel 11, durchströmt anschließend ein Filterelement 24 und gelangt über die Lufteinlassöffnungen 20 in das Trockenmittelbett. Das Innengehäuse 17 ist mit einer Druckfeder 23 in Kontakt die sich an der Kontur 16 des Außengehäuses 10 abstützt.

Diese Feder hat die Aufgabe, das Trockenmittel zu fixieren, so dass eine Lockerung der Schüttung nicht möglich ist.

Innerhalb der Druckfeder 23 befinden sich an der Abstützfläche für die Druckfeder ebenfalls Lufteinlassöffnungen 25, die dafür sorgen, dass das Trockenmittel im zentrischen Bereich ebenfalls mit Luft durchströmt wird.

## Patentansprüche

1. Trockenmittelbox zum Entfeuchten von Luft mit einem zylindrischen Außengehäuse (10), einem das Außengehäuse verschließenden Deckel (11), einem Innengehäuse (12) zur Aufnahme eines Trockenmittels (13), wobei der Deckel (11) wenigstens eine Einströmöffnung (14) und wenigstens eine Ausströmöffnung (15) aufweist und wobei das Außengehäuse eine dem Deckel gegenüberliegend angeordnete gewölbte Kontur aufweist, **dadurch gekennzeichnet, dass** ein weiteres Innengehäuse (17) vorgesehen ist, welches im Bereich der Kontur (16) angeordnet ist und näherungsweise entlang dieser Kontur verläuft, wobei dieses Innengehäuse ebenfalls mit Trockenmittel (18) gefüllt ist und Innengehäuse (12) mit Innengehäuse (17) verbunden sind.

2. Trockenmittelbox nach Anspruch 1, **dadurch gekennzeichnet, dass** das Innengehäuse (12) und/oder das Innengehäuse (17) einen Luftdurchlässigen Deckel zum Halten des Trockenmittels in dem jeweiligen Innengehäuse aufweist.

3. Trockenmittelbox nach Anspruch 1 oder 2, **dadurch gekennzeichnet, dass** das Innengehäuse (17) im Bereich der Kontur Lufteinlassöffnungen (20) aufweist.

4. Trockenmittelbox nach Anspruch 1, **dadurch gekennzeichnet, dass** das Innengehäuse (12) im Bereich der Ausströmöffnung (15) Luftauslassöffnungen (21) aufweist.

5. Trockenmittelbox nach einem der vorherigen Ansprüche, **dadurch gekennzeichnet, dass** die beiden Innengehäuse (12 und 17) miteinander über eine Rastverbindung (22), die konzentrisch ausgeführt ist, miteinander verrastet sind.

6. Trockenmittelbox nach einem der vorherigen Ansprüche, **dadurch gekennzeichnet, dass** zwischen Außengehäuse (10) und Innengehäuse (17) im Bereich der Kontur (16) eine Druckfeder (23) zur Komprimierung des Druckmittels angeordnet ist, wobei sich die Druckfeder einerseits an der Kontur (16) und andererseits an dem Innengehäuse (17) abstützt.

7. Trockenmittelbox nach einem der vorherigen Ansprüche, **dadurch gekennzeichnet, dass** für die einströmende zu entfeuchtende Luft ein Filterelement (24) vorgesehen ist.

## Claims

1. Desiccant box for dehumidifying air, with a cylindrical outer housing (10), a cover (11) that closes the outer housing, an inner housing (12) to accommodate a desiccant (13), the cover (11) featuring at least one inflow opening (14) and at least one outflow opening (15), and the contour of the outer housing opposite the cover being curved, **characterized in that** another inner housing (17) is provided which is located in the area of the contour (16) and runs approximately along this contour, this inner housing being also filled with desiccant (18), and the inner housing (12) being connected to the inner housing (17).

2. Desiccant box according to claim 1, **characterized in that** the inner housing (12) and/or the inner housing (17) features an air-permeable cover to retain the desiccant in the respective inner housing.

3. Desiccant box according to claim 1 or 2, **characterized in that** the inner housing (17) features air inlets (20) in the area of the contour.

4. Desiccant box according to claim 1, **characterized in that** the inner housing (12) features air outlets (21) in the area of the outflow opening (15).

5. Desiccant box according to one of the above claims, **characterized in that** both inner housings (12 and 17) snap into each other by means of a concentrically designed snap-in connection (22).

6. Desiccant box according to one of the above claims, **characterized in that** between the outer housing (10) and the inner housing (17) in the area of the contour (16), there is a compression spring (23) to compress the compression medium, the compression spring being supported by the contour (16) on the one hand and by the inner housing (17) on the other hand.

7. Desiccant box according to one of the above claims, **characterized in that** a filter element (24) is intended for the inflowing air that is to be dehumidified.

## Revendications

1. Réservoir d'agent déshydratant destiné à la déshydratation de l'air, avec un boîtier extérieur (10) cylindrique, un couvercle (11) obturant le boîtier extérieur, un boîtier intérieur (12) servant à réceptionner un agent déshydratant (13), le couvercle (11) présentant au moins une ouverture d'admission (14) et au moins une ouverture de sortie (15) et le boîtier extérieur présentant un contour bombé disposé en face du couvercle, **caractérisé en ce qu'**un autre un boîtier intérieur (17) disposé dans la zone du contour (16) et évoluant à proximité et le long de ce contour est prévu, ce boîtier intérieur étant également rempli d'agent déshydratant (18) et le boîtier intérieur (12) étant relié au boîtier intérieur (17).

2. Réservoir d'agent déshydratant selon la revendication 1, **caractérisé en ce que** le boîtier intérieur (12) et/ou le boîtier intérieur (17) présente un couvercle perméable à l'air destiné à maintenir l'agent déshydratant dans le boîtier intérieur correspondant.

3. Réservoir d'agent déshydratant selon la revendication 1 ou 2, **caractérisé en ce que** le boîtier intérieur (17) présente des ouvertures d'admission d'air (20) dans la zone du contour.

4. Réservoir d'agent déshydratant selon la revendication 1, **caractérisé en ce que** le boîtier intérieur (12) présente des ouvertures de sortie d'air (21) dans la zone de l'ouverture d'échappement (15).

5. Réservoir d'agent déshydratant selon l'une des revendications précédentes, **caractérisé en ce que** les deux boîtiers intérieurs (12 et 17) sont encliquetés l'un avec l'autre par un assemblage encliqueté (22) réalisé de manière concentrique.

6. Réservoir d'agent déshydratant selon l'une des revendications précédentes, **caractérisé en ce qu'**entre le boîtier extérieur (10) et le boîtier intérieur (17), un ressort de pression (23) servant à comprimer le moyen de pression est disposé dans la zone du contour (16), le ressort de pression s'appuyant d'un côté sur le contour (16) et de l'autre côté sur le boîtier intérieur (17).

7. Réservoir d'agent déshydratant selon l'une des revendications précédentes, **caractérisé en ce qu'**un élément filtrant (24) est prévu pour l'air entrant à déshydrater.
